# EUROPÄISCHE PATENTSCHRIFT

(11) **EP 3 870 406 B1**
(45) Veröffentlichungstag und Bekanntmachung des Hinweises auf die Patenterteilung: **12.03.2025**
(21) Anmeldenummer: 19773813.1
(22) Anmeldetag: 23.09.2019
(51) Int. Cl.: B25J 9/16

(54) **VERFAHREN ZUM ERSTELLEN EINES OBJEKTMODELLS ZUM GREIFEN EINES OBJEKTS, COMPUTERLESBARES SPEICHERMEDIUM UND ROBOTERSYSTEM**
METHOD FOR CREATING AN OBJECT MODEL FOR GRIPPING AN OBJECT, COMPUTER-READABLE STORAGE MEDIUM, AND ROBOT SYSTEM
PROCÉDÉ DE CRÉATION D'UN MODÈLE D'OBJET SERVANT À SAISIR UN OBJET, SUPPORT DE STOCKAGE LISIBLE PAR ORDINATEUR ET SYSTÈME ROBOTISÉ

(30) Priorität: 23.10.2018 DE 102018126310
(43) Veröffentlichungstag der Anmeldung: 01.09.2021
(73) Patentinhaber: Roboception GmbH, 81241 München (DE)
(72) Erfinder: GAMBARO, Elena, Francesca, 80687 München (DE); EMMERICH, Christian, 82178 Puchheim (DE); MÜNSTER, Korbinian, 80337 München (DE); SCHALLER, Raphael, 80687 München (DE)
(74) Vertreter: Meissner Bolte Partnerschaft mbB
(86) Internationale Anmeldenummer: PCT/EP2019/075523
(87) Internationale Veröffentlichungsnummer: WO 2020/083586

(56) Entgegenhaltungen:
- EP-A2- 1 589 483
- WO-A1-2014/188177
- DETRY RENAUD ET AL: "Learning a dictionary of prototypical grasp-predicting parts from grasping experience", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 601 - 608, XP032506517, ISSN: 1050-4729, ISBN: 978-1-4673-5641-1, [retrieved on 20131013], DOI: 10.1109/ICRA.2013.6630635
- DETRY R ET AL: "Learning object-specific grasp affordance densities", DEVELOPMENT AND LEARNING, 2009. ICDL 2009. IEEE 8TH INTERNATIONAL CONFERENCE ON, IEEE, PISCATAWAY, NJ, USA, 5 June 2009 (2009-06-05), pages 1 - 7, XP031497733, ISBN: 978-1-4244-4117-4
- UNO Y ET AL: "A Computational Model for Recognizing Objects and Planning Hand Shapes in Grasping Movements", NEURAL NETWORKS, ELSEVIER SCIENCE PUBLISHERS, BARKING, GB, vol. 8, no. 6, 1 January 1995 (1995-01-01), pages 839 - 851, XP004224109, ISSN: 0893-6080, DOI: 10.1016/0893-6080(95)00002-H

## Beschreibung

Die Erfindung betrifft ein Verfahren zum Ansteuern eines ersten und zweiten Manipulators eines Robotersystems zum Greifen eines Objekts, ein computerlesbares Speichermedium und ein Robotersystem.

Das Greifen von Objekten und die Verwendung von Robotersystemen ist schwierig.

Insbesondere, wenn ein Robotersystem in sogenannten unstrukturierten Arbeitsumgebungen ein Objekt greifen muss, kann es zu Fehlern beim Greifen des Objekts kommen. Eine unstrukturierte Arbeitsumgebung zeichnet sich dadurch aus, dass die Objekte an unbekannten Orten in einer unbekannten Ausrichtung liegen.

In einer solchen unstrukturierten Arbeitsumgebung, bei der keinerlei Informationen über die zu greifenden Objekte vorliegen, werden in der Regel sogenannte modellfreie Verfahren eingesetzt. Eine typische Herangehensweise ist das Verwenden von Sauggreifern in Verbindung mit Bilderkennungsverfahren, die aus Kamerabildern Greifregionen segmentieren. Dabei kann eine RGB-Kamera oder auch eine Stereokamera oberhalb der Objekte statisch angeordnet sein. Diese Verfahren sind jedoch fehleranfällig und langsam, d. h. rechenintensiv.

Bessere Ergebnisse werden durch die Verwendung sogenannter modellbasierter Verfahren erzielt, bei denen die geometrischen Daten eines Objekts bekannt sind. Das Wissen über die Geometrie und das Erscheinungsbild von Objekten werden ausgenutzt, um diese zu erkennen, ihre Lage zu schätzen und Greifpunkte auszuwählen.

Moderne Lagerhäuser und Warenverteilzentren basieren zunehmend auf roboter- und datenbasierten Intralogistiklösungen zur Automatisierung von Material und Warenflüssen, der Kommissionierung von Kundenaufträgen oder Inventarisierung von Lagerbeständen. Ein wichtiger Teilschritt in der Logistikkette ist das automatisierte Handhaben von Kleinteilen. Das automatisierte Handhaben von Kleinteilen ist insbesondere bei der Vereinzelung oder bei der Kommissionierung von Artikeln für eine Kundenbestellung notwendig, wie sie z.B. bei einer Bestellung über das Internet auftritt. Diese Kleinteile - im nachfolgenden auch Objekte genannt - lagern dabei typischerweise unstrukturiert, zum Beispiel geschüttet, in Lagerkisten, was hohe Anforderungen an eine automatisierte Handhabung der Kleinteile stellt.

Um ein möglichst fehlerfreies Greifen zu ermöglichen, das gegenüber Prozessfehlern robust ausgeführt wird, halten Warenhausmanagement Datenbanken mit Daten über die zu bearbeiteten Waren bereit. Diese enthalten zum Beispiel Informationen über Identifikationsnummern, Beschreibungen, die Größe, die Form, das Gewicht, die Beschaffenheit und/oder weitere Angaben. Diese Datenbanken sind jedoch in vielen Fällen unvollständig. Meist fehlen geometrische Informationen, die zur automatisierten Erkennung und zur Handhabung der Waren des Warenhauses, zum Beispiel mit einem Mehrachsroboter, erforderlich sind. Solche geometrischen Informationen können als 3D-Modelle, CAD Daten, 3D Texturen, mögliche Greifpunkte oder ähnliches vorliegen. In bestehenden Systemen sind solche Daten nicht selten für weniger als 1% der Waren verfügbar. Es ist also in der Praxis oftmals nicht möglich, modellbasierte Greifverfahren einzusetzen. Stattdessen werden modellfreie Verfahren eingesetzt, die die vorstehend beschriebenen Nachteile aufweisen.

Die WO 2014/188 177 A1 beschreibt ein Verfahren, um das Greifen von Objekten mit Hilfe eines Manipulators zu verbessern. Dabei werden beim Greifen eines Trainingsobjekts Beispielgreifdaten erzeugt, die beispielsweise durch manuelles oder virtuelles Einlernen erzeugt sind.

Die EP 1 589 483 A2 beschreibt ein modellbasiertes Greifverfahren, welches ein "binpicking" mit sich überlagernden Objekten, verbessern soll. Die EP 1 589 483 A2 beschreibt, dass zunächst zum Erstellen eines Objektmodells ein Greifen eines Referenzobjektes angelernt wird. Das Greifen des Referenzobjekts wird von einem Perzeptionssystem aufgezeichnet und entsprechende Modelldaten werden gespeichert, die im weiteren Verlauf verwendet werden können.

Die Veröffentlichung DETRY R ET AL: "Learning object-specific grasp affordance densities", IEEE 8TH INTERNATIONAL CONFERENCE ON DEVELOPMENT AND LEARNING, 2009; 5. Juni 2009, Seiten 1-7 beschreibt, dass Objekte unter Verwendung von Teilmodellen gegriffen werden können, auch wenn die Objekte nicht vollständig sichtbar sind. Dabei werden vollständig bekannte 3D-Modell verwendet.

Die Veröffentlichung UNO Y ET AL: "A Computational Model for Recognizing Objects and Planning Hand Shapes in Grasping Movements", NEURAL NETWORKS, ELSEVIER SCIENCE PUBLISHERS, BARKING, GB, Bd. 8, Nr. 6, 1. Januar 1995, Seiten 839-851 beschreibt ein Verfahren, um mögliche Greifposen zu lernen und darauf basierend Modelle zu erzeugen, mit denen neue Greifposen generiert werden können.

Es ist daher Aufgabe der vorliegenden Erfindung das Greifen von Objekten zu verbessern, wenn ein modellbasiertes Verfahren zum Greifen der Objekte nicht anwendbar ist.

Diese Aufgabe wird gelöst durch ein Verfahren nach Anspruch 1, durch ein computerlesbares Speichermedium nach Anspruch 7 und durch ein Robotersystem nach Anspruch 8.

Insbesondere wird die Aufgabe gelöst durch ein Verfahren zum Ansteuern eines ersten und zweiten Manipulators eines Robotersystems zum Greifen eines Objekts, insbesondere für ein erstes Robotersystem, folgende Schritte aufweisend:
- Empfangen einer ersten visuellen Objektrepräsentation, die mindestens ein erstes zu greifendes Objekt angibt;
- Bestimmen einer Greifstrategie unter Verwendung der ersten Objektrepräsentation mit einem modellfreien Greifverfahren;
- Ansteuern des ersten Manipulators zum Greifen des ersten Objekts unter Verwendung der Greifstrategie;
- Erstellen eines Objektmodells unter Verwendung der ersten Objektrepräsentation für ein modellbasiertes Greifen des Objekts,
- Bestimmen einer der ersten Objektrepräsentation zugeordneten Qualitätsangabe, die die Qualität des Greifens unter Verwendung der Greifstrategie angibt und eine Angabe über die Anzahl visueller Merkmale der ersten Objektrepräsentation umfasst und eine Angabe darüber enthält, ob das Greifen des Objekts erfolgreich ausgeführt worden ist;
- Speichern des Objektmodells, der Objektrepräsentation und der Qualitätsangabe;
- Vergleichen der bestimmten Qualitätsangabe mit einer gespeicherten Qualitätsangabe, die einer zweiten gespeicherten Objektrepräsentation zugeordnet ist

Dabei ist erfindungsgemäß, in Abhängigkeit des Vergleichens, sowohl ein Aktualisieren des gespeicherten Objektmodells unter Verwendung der ersten und zweiten Objektrepräsentation, als auch ein Ansteuern des zweiten Manipulators zum Greifen mindestens eines zweiten Objekts unter Verwendung des Objektmodells erfindungsgemäß vorgesehen, ebenfalls erfindungsgemäß unter Verwendung eines modellbasierten Greifverfahrens und unter Verwendung des Objektmodells, wobei das erste Objekt und das zweite Objekt vom selben Typ sind.

Unter einem Manipulator kann im Rahmen dieser Anmeldung ein Mehrachsroboter, insbesondere ein Sechsachsroboter, ein Siebenachsroboter oder ein Zweiachsroboter verstanden werden. Es ist jedoch auch vorgesehen, dass ein Manipulator lediglich den Endeffektor eines Roboterarms bezeichnet. Ein Manipulator kann allgemein eine Vorrichtung bezeichnen die dazu ausgebildet sein kann, ein Objekt in seiner Lage und/oder Ausrichtung zu verändern. Dazu zählen insbesondere auch Parallelgreifer oder Vakuumgreifer.

Unter einem Ansteuern bzw. Steuern eines Manipulators kann im Rahmen dieser Anmeldung ein Ansteuern des Manipulators derart verstanden werden, dass der Manipulator seine Lage bzw. Orientierung in einem kartesischen Koordinatensystem verändert. Darüber hinaus kann unter dem Ansteuern bzw. Steuern eines Manipulators verstanden werden, einen Parallelgreifer zu schließen oder zu öffnen, insbesondere unter Berücksichtigung einer aufzubringenden Kraft. Darüber hinaus kann das Steuern bzw. Ansteuern ein Aktivieren bzw. Deaktivieren eines Vakuumgreifers umfassen, wobei der zu erzeugende Unterdruck ebenfalls einstellbar sein kann.

Die einzelnen Verfahrensschritte des beschriebenen Verfahrens werden in der Reihenfolge ausgeführt, wie sie vorstehend beschrieben und in den Ansprüchen definiert ist.

Ein Kern der Erfindung besteht darin, dass zunächst mit einem modellfreien Verfahren ein Greifen von Objekten möglich ist. Die Daten, die beim Greifen mittels des modellfreien Verfahrens aufgezeichnet werden, d.h. eine Objektrepräsentation, werden verwendet, um ein Objektmodell zu erstellen. Nachdem ein Objektmodell erstellt worden ist, kann unter Verwendung des Objektmodells weiter gegriffen werden.

Somit wird es ermöglicht, dass auch ohne ein vorliegendes Objektmodell mit einem Greifen von Objekten begonnen werden kann. Sobald ein Objektmodell erstellt ist, kann ein sichereres bzw. robusteres Greifverfahren eingesetzt werden. Durch das Verwenden eines modellbasierten Greifverfahrens, sobald dies möglich ist, werden Rechenressourcen geschont und die Prozesssicherheit erhöht.

Darüber hinaus wird es ermöglicht, dass ein erster Manipulator unter Verwendung eines modellfreien Verfahrens Daten sammelt, um ein Objektmodell zu erstellen. Sobald das Objektmodell erstellt ist, kann in einer Ausführungsform das Objektmodell an eine Vielzahl von Manipulatoren übertragen werden, sodass eine Vielzahl von Manipulatoren von dem Objektmodell Gebrauch machen können.

Somit kann das Wissen, das durch einen einzelnen Manipulator gesammelt wurde mit einer Vielzahl von Manipulatoren geteilt werden. Insgesamt kann somit die Bearbeitung von Greifaufträgen in einem Warenhaus deutlich verbessert werden.

Ein Objekt bzw. Kleinteil weist insbesondere Maße auf, die kleiner 1 Meter x 1 Meter sind, bevorzugt kleiner 50 Zentimeter x 50 Zentimeter oder besonders bevorzugt kleiner 20 Zentimeter x 20 Zentimeter sind.

In einer Ausführungsform ist eine Objektrepräsentation durch eine 3D- Punktewolke angegeben. In einer weiteren Ausführungsform kann eine 2D- Repräsentation, zum Beispiel ein Kamerabild, eine Objektrepräsentation darstellen.

Erfindungsgemäß umfasst das Verfahren ein Speichern zumindest der Objektmodells, der Qualitätsangabe und der Objektrepäsentation in einer Datenbank. Durch ein Speichern des Objektmodells bzw. der Objektrepräsentation in einer Datenbank, wird es möglich, dass die Daten strukturiert gespeichert werden. Darüber hinaus kann eine Vielzahl unterschiedlicher Entitäten auf die Daten zugreifen. Ferner wird es möglich gemacht, dass die Datenbank an einem entfernten Standort zu dem Manipulator angeordnet ist. Der Manipulator und die Datenbank können in einer Ausführungsform über das Internet miteinander kommunikativ verbunden sein. Es ist jedoch auch möglich, dass die Datenbank und der Manipulator in einem Intranet oder auch drahtgebunden oder drahtlos direkt miteinander verbunden sind. Das Speichern der Objektrepräsentation kann durch ein Speichern von Mesh-Daten umgesetzt sein. Ferner umfasst das Verfahren ein Aktualisieren des gespeicherten Objektmodells unter Verwendung der Objektrepräsentation.

Es ist also nicht nur möglich, aus einer Objektrepräsentation ein Objektmodell zu erstellen, sondern es ist ferner möglich, ein Objektmodell unter Verwendung einer Objektrepräsentation zu aktualisieren. Dies hat den Vorteil, dass ein Objektmodell stetig verbessert werden kann. Insbesondere ist es möglich, dass ein Objektmodell so lange verbessert wird, bis es vorteilhaft ist, ein modellbasiertes Greifverfahren einzusetzen. Es kann also ein Umschalten von einem modellfreien Greifverfahren auf ein modellbasiertes Greifverfahren umgesetzt werden.

In der bevorzugten Ausführungsform sind das erste Objekt und das zweite Objekt vom selben Typ und weisen im Wesentlichen identische geometrische Maße auf**.** Weiterhin können sie im Wesentlichen identische Gewichte aufweisen. In einer Ausführungsform kann das erste und das zweite Objekt ein identisches Äußeres aufweisen. Insbesondere weisen das erste und zweite Objekt gleiche visuelle Merkmale auf**.** Es ist weiter denkbar, dass das erste und zweite Objekt ein Farbhistogramm und/oder eine Textur aufweisen, die hinsichtlich einer Metrik zumindest im Wesentlichen identisch sein können.

Das erste und das zweite Objekt können zum Beispiel vom selben Produkttyp sein.

Wenn das erste und das zweite Objekt vom selben Typ sind, dann kann das Objektmodell bei jedem Greifen mittels des Manipulators aktualisiert werden, da jedes Greifen demselben Objekttyp zuordenbar ist. Eine aufwendige Erkennung von Objekten entfällt in diesem Fall.

Im Rahmen dieser Anmeldung bedeutet das Vorliegen von im Wesentlichen identischen geometrischen Maßen bzw. Gewichten und Metriken, dass Abweichungen innerhalb eines Toleranzintervalls, insbesondere kleiner 10 %, bevorzugt kleiner 5%, besonders bevorzugt kleiner 1%, liegen.

Das Verfahren umfasst ferner ein Bestimmen einer der ersten Objektrepräsentation zugeordneten Qualitätsangabe, die die Qualität des Greifens unter Verwendung der Greifstrategie angibt, wobei das Speichern ein Speichern der Qualitätsangabe umfasst.

Eine Qualitätsangabe kann eine Angabe dazu enthalten, ob ein Greifen unter Verwendung der Greifstrategie erfolgreich ausgeführt worden ist. Es ist somit möglich, festzustellen, ob eine Greifstrategie gut funktioniert hat oder nicht. Zum Beispiel kann die Qualitätsangabe durch eine Ganzzahl repräsentiert sein. Dabei könnte in einer Ausführungsform ein Wert "0" angeben, dass das Objekt während des Greifens fallen gelassen wurde. Ein Wert "10" könnte angeben, dass das Greifen des Objekts sehr gut funktioniert hat. Eine Qualitätsangabe kann daher in einem vordefinierten Intervall liegen. Es ist auch denkbar, eine Konfidenz im Konfidenzintervall 0 bis 1 zu definieren, wobei eine Qualitätsangabe mit einem Konfidenzwert 0 angeben könnte, dass das Objekt während des Greifens fallen gelassen wurde und ein Konfidenzwert von 1 könnte angeben, dass das Greifen sehr gut funktioniert hat.

In einer Ausführungsform kann eine Greifstrategie eine Anfahrpose und/oder zumindest einen Greifpunkt umfassen. Ein Greifpunkt kann als Pose, d. h. als sechsdimensionaler Datenpunkt repräsentiert sein.

Ferner umfasst das Verfahren ein Vergleichen der bestimmten Qualitätsangabe mit einer gespeicherten Qualitätsangabe, die einer zweiten Objektrepräsentation zugeordnet ist, wobei das Aktualisieren des gespeicherten Objektmodells und das Ansteuern des zweiten Manipulators in Abhängigkeit des Vergleichens ausgeführt wird.

Durch die beschriebene Ausführungsform wird eine Art Filterfunktion bereitgestellt, die es erlaubt, nur jene Objektrepräsentationen zu speichern, die zu guten Ergebnissen geführt haben. Somit wird Speicherplatz eingespart und ein besseres Objektmodell erstellt, sodass bessere Greifvorgänge unter Verwendung des Objektmodells erzielt werden.

In einer Ausführungsform kann das Verfahren ein Prüfen umfassen, ob ein Prüfkriterium bezüglich des Objektmodells erfüllt ist, wobei das Prüfkriterium insbesondere angeben kann, ob das Objektmodell zu besseren Greifergebnissen führen wird als das modellfreie Verfahren, wobei das Steuern mit einem modellbasierten Verfahren ausgeführt wird, wenn das Prüfkriterium erfüllt ist.

Für das Umschalten von einem modellfreien Greifverfahren zu einem modellbasierten Greifverfahren kann ein Prüfkriterium zugrunde gelegt werden. Dieses Prüfkriterium kann beispielsweise dann erfüllt sein, wenn keine neuen Objektrepräsentationen mehr erstellt bzw. aufgezeichnet werden. Ein weiteres Prüfkriterium kann darin bestehen, zu prüfen, ob ein Greifen unter Verwendung eines modellbasierten Verfahrens mit dem Objektmodell in einer Simulation erfolgreich ausgeführt werden kann.

Ein Vorteil der beschriebenen Ausführungsform besteht also darin, dass das modellbasierte Greifverfahren erst dann eingesetzt wird, wenn das erzeugte Objektmodell über eine hinreichende Qualität verfügt. Somit kann gewährleistet werden, dass das modellbasierte Greifverfahren bessere Ergebnisse liefert als das modellfreie Greifverfahren.

In einer Ausführungsform kann ein/das Objektmodell als ein CAD-Modell ausgebildet sein, insbesondere ein durch ein Registrierungs- und/oder Stitching-basiertes Verfahren erzeugtes CAD-Modell, als eine Menge von einzelnen Ansichten und/oder als 3D-Punktewolke.

Es gibt eine Reihe unterschiedlicher Möglichkeiten wie das Objektmodell repräsentiert sein kann. Besonders gute Ergebnisse werden erzielt, wenn das Objektmodell als ein CAD-Modell vorliegt. Ein solches CAD Modell kann beispielsweise durch das Zusammenfügen einer Vielzahl unterschiedlicher Objektrepräsentationen, sogenannte Registrierungs- und/oder Stitching-Verfahren, erzeugt werden.

Es ist jedoch auch möglich, dass das Objektmodell lediglich aus einer Vielzahl von unterschiedlichen Ansichten vorliegt. Beim Greifen mit einem modellbasierten Greifverfahren kann in diesem Fall eine Ansicht aufgenommen werden und mit den in der Datenbank gespeicherten Ansichten verglichen werden. Wenn bereits eine ähnliche Ansicht gespeichert ist, kann eine Greifstrategie verwendet werden, wie jene, die beim Greifen verwendet wurde, als die in der Datenbank gespeicherte Ansicht erstellt wurde.

Eine weitere Möglichkeit besteht darin, eine Vielzahl von 3D-Punktewolken zu speichern. Es ist auch möglich eine einzige 3D-Punktewolke zu speichern, wobei die Daten einer Vielzahl von unterschiedlichen Objektrepräsentationen in einer 3D-Punktewolke zusammengefasst sein können.

Die bestimmte Qualitätsangabe umfasst eine Angabe über die Anzahl visueller Merkmale, insbesondere von Kanten, der Objektrepräsentation.

In einer Ausführungsform kann die erste Objektrepräsentation nur dann gespeichert werden, wenn das Vergleichen ergibt, dass die erste Objektrepräsentation mehr visuelle Merkmale enthält, als die zweite Objektrepräsentation.

Ein möglicher Indikator für die Qualität einer Objektrepräsentation ist die Anzahl visueller Merkmale. Ein visuelles Merkmal kann zum Beispiel durch eine Anzahl von Kanten oder eine Anzahl von Ecken angegeben sein.

Die Qualitätsangabe enthält eine Angabe darüber, ob ein Greifen eines und/oder des Objekts erfolgreich ausgeführt worden ist.

In einer Ausführungsform kann das Verfahren ein Berechnen einer Prüfsumme für die erste Objektrepräsentation umfassen, wobei die Prüfsumme eine Version der Objektrepräsentation angeben kann.

Es ist also auch möglich, eine Versionierung der Objektrepräsentation zu implementieren. Dies kann dann vorteilhaft sein, wenn eine Vielzahl von Systemen parallel das beschriebene Verfahren ausführen und in einer gemeinsamen Datenbank ihre Daten abspeichern.

Es ist auch möglich, dass das erzeugte Objektmodell eine bestimmte Version aufweist, die ebenfalls über die Berechnung eines Haschwertes bestimmt sein kann.

Zum Beispiel kann durch die Versionierung eines Objektmodells ein System, welches bereits eine erste Version des Objektmodells lokal speichert, eine Anfrage an die Datenbank senden, ob eine neue Version des Objektmodells bereitsteht. Wenn eine neue Version des Objektmodells bereitsteht, kann diese Version des Objektmodells heruntergeladen werden und zum modellbasierten Greifen eingesetzt werden.

In einer Ausführungsform kann das Verfahren ein Trainieren eines Klassifikators, insbesondere eines künstlichen neuronalen Netzes, unter Verwendung der Greifstrategie, des Objektmodells und/oder der ersten und/oder zweiten Objektrepräsentation umfassen.

Sämtliche Daten, die in der Datenbank gespeichert werden, können dazu verwendet werden einen Klassifikator zu trainieren. Dabei können die Daten als "gelabelte" sog. "ground truth" Daten zum Trainieren herangezogen werden. So kann als Eingabe des Klassifikators die Objektrepräsentation, der verwendete Manipulator und als zu klassifizierende Klasse die Greifstrategie verwendet werden. Somit entfällt das aufwendige manuelle Labeln von Daten.

In einer weiteren Ausführungsform kann das Verfahren ein Identifizieren von Objekten in einem Zielbereich unter Verwendung des Objektmodells und ein Vergleichen der identifizierten Objekte mit einer Datenbasis umfassen.

Mit der vorstehend beschriebenen Ausführungsform können die Objekte in einem Zielbereich mit den Bestandsdaten in einem Lagerverwaltungssystem verglichen werden. Somit kann vollautomatisch überprüft werden, ob die in dem Lagerverwaltungssystem hinterlegten Daten mit den tatsächlich vorhandenen Objekten übereinstimmen. Dazu kann das Objektmodell eingesetzt werden, da es mit diesem möglich ist, Objekte eindeutig zu einem Objekttyp zuzuordnen.

Die Aufgabe wird ebenfalls insbesondere gelöst durch ein computerlesbares Speichermedium, welches Instruktionen enthält, die mindestens einen Prozessor dazu veranlassen, ein Verfahren, wie es vorstehend beschrieben ist, zu implementieren, wenn die Instruktionen durch den mindestens einen Prozessor ausgeführt werden.

Es ergeben sich ähnliche oder identische Vorteile, wie sie bereits im Hinblick auf das Verfahren beschrieben worden sind.

Die Aufgabe wird ebenfalls insbesondere gelöst durch ein Robotersystem, umfassend:
- mindestens eine Perzeptionseinrichtung zum Erfassen einer Objektrepräsentation eines Objekts;
- einen Manipulator, der dazu ausgebildet ist, das Objekt zu greifen;
- einer Steuereinrichtung mit einer Speichereinrichtung, wie vorstehend beschrieben, und einer Recheneinrichtung.

Die mindestens eine Perzeptionseinrichtung kann zum Beispiel als eine 3D- Kamera, eine RGB-Kamera, ein Ultraschallsensor, ein Lasersensor, ein LIDAR-System oder auch als ein Radarsystem ausgebildet sein.

Es ergeben sich ähnliche oder identische Vorteile, wie sie bereits im Hinblick auf das Verfahren beschrieben worden sind.

Weitere Ausführungsformen ergeben sich aus den Unteransprüchen.

Im Folgenden wird die Erfindung anhand von Ausführungsbeispielen und Figuren näher erläutert. Dabei zeigen:
- Figur 1:: ein Roboter beim Greifen von Objekten aus einer Kiste;
- Figur 2:: eine 2D-Repräsentation des Kisteninhalts und die Verarbeitung der 2D-Repräsentation;
- Figur 3:: eine beispielhafte Datenbank;
- Figur 4:: ein Flussdiagram zum Wechsel von modellfreiem zu modellbasiertem Steuern des Roboters:
- Figur 5:: ein Zusammenfügen von unterschiedlichen Objektrepräsentationen zu einem Objektmodell;
- Figur 6:: ein verteiltes Robotersystem.

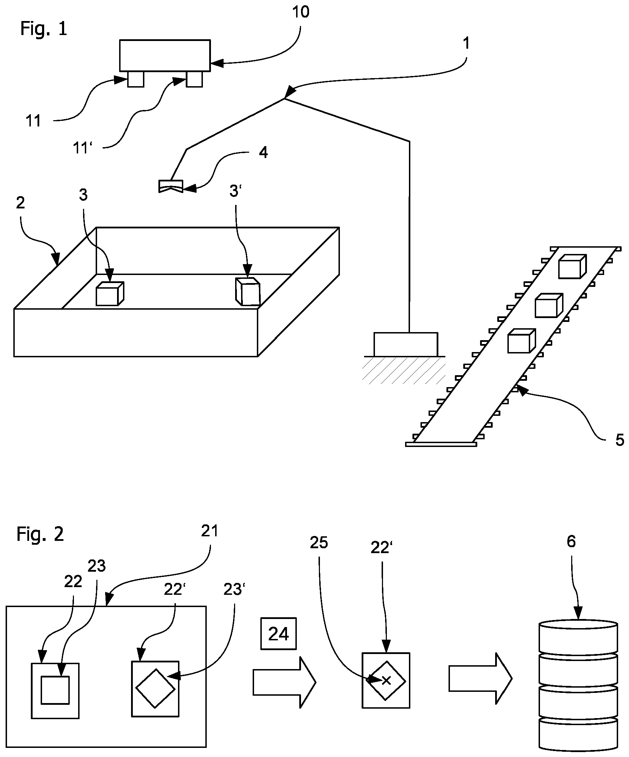

Figur 1 zeigt einen Roboter 1, der im gezeigten Ausführungsbeispiel als ein Mehrachsroboter ausgebildet ist. Der Roboter 1 verfügt über einen Vakuumgreifer bzw. Sauggreifer 4. Zum Erzeugen eines Unterdrucks ist ein Kompressor vorgesehen, der nicht dargestellt ist. Der Roboter 1 ist neben einer Kiste 2 angeordnet, in der die zwei Objekte 3, 3' liegen.

Oberhalb der Kiste 2 ist ein 3D Kamerasystem 10 angeordnet, welches über zwei Kameras 11, 11' verfügt. Das 3D-Kamerasystem 10 ist dazu ausgebildet, eine 3D-Punktewolke zu erzeugen. Das 3D-Kamerasystem 10 ist derart angeordnet, dass es eine 3D-Punktewolke der Kiste 2 erzeugen kann. Im gezeigten Ausführungsbeispiel ist das 3D-Kamerasystem 10 ca. 1 m oberhalb der Kiste 2 angeordnet.

Die Objekte 3, 3' liegen unstrukturiert in der Kiste 2 vor. Das bedeutet, dass keinerlei Information über die Position oder die Anordnung a priori bekannt sind. Es ist Aufgabe des Roboters 1, die Objekte 3, 3' in der Kiste 2 auf das neben dem Roboter 1 angeordnete Förderband 5 zu legen.

Die Verarbeitung der 3D-Repräsentation, die durch das Kamerasystem 10 erzeugt wird, ist vereinfacht in Figur 2 gezeigt.

Die Figur 2 zeigt eine 2D-Repräsentation 21 des Kisteninhalts der Kiste 2 von oben. Somit sind in der 2D-Repräsentation 21 Objektrepräsentationen 23, 23' der Objekte 3, 3' zu erkennen.

Zur Verarbeitung der 2D-Repräsentation 21 wird die 2D-Repräsentation 21 zunächst segmentiert. Dabei müssen die Objektrepräsentationen 23, 23' erkannt und aus der 2D-Repräsentation 21 extrahiert werden. Häufig können Objekte bereits aufgrund einer unterschiedlichen Farbe von dem Untergrund der Kiste 2 unterschieden werden. Auch allgemeine Kontrastunterschiede sowie, wenn 3D- Informationen vorliegen, besonders starke Veränderungen im Gradienten, d. h. plötzliche und starke Abstandsänderungen, können den Übergang von Objekt 3, 3' zu Kistenboden indizieren. Es ist ferner möglich, ein erstes Bild der Kiste 2 vor einem Greifen aufzunehmen und ein weiteres Bild nach dem Greifen. Somit kann durch die Überlagerung der aufgezeichneten Bilder bestimmt werden, wo sich das gegriffene Objekt 3, 3' vor dem Greifen befunden hat und welche geometrischen Ausmaße es aufweist. Unter Verwendung der zwei aufgezeichneten Bilder kann somit die Objektrepräsentation 23, 23' effizient aus der 2D-Repräsentation 21 extrahiert werden.

Bei der Segmentierung werden um die Objektrepräsentationen 23, 23' sogenannte Bounding-Boxes 22, 22' gezogen. Im Folgenden wird die weitere Verarbeitung bezüglich der Objektrepräsentationen 23' dargestellt. Nachdem die Objektrepräsentation 23' extrahiert worden ist, kann für das zugeordnete Objekt 3' eine Greifstrategie 24 unter Verwendung eines modellfreien Verfahrens bestimmt werden. Das bedeutet, dass ein Greifpunkt 25, eine Anfahrtstrajektorie, und auch der Ansaugdruck des Manipulators 4 bestimmt werden.

Das Objekt 3' wird unter Verwendung der bestimmten Greifstrategie 24 gegriffen und auf das Förderband 5 gelegt. Dabei wird gespeichert, ob das Greifen mit der Greifstrategie 24 auf Anhieb funktioniert hat und auch wie lange das Greifen und bzw. das Ablegen gedauert hat.

Darüber hinaus wird für die Bounding-Box 22' bestimmt, wieviele visuelle Merkmale diese Aufnahme bzw. Ansicht aufweist. Dabei wird die Anzahl der Kanten bestimmt und gezählt. Eine Kantenbestimmung kann nach bekannten Verfahren, wie zum Beispiel durch einen Sobel-Operator, einen Laplace-Filter, den Canny-Algorithmus oder auch durch den Roberts-Operator ausgeführt werden.

Aus der Anzahl der bestimmten visuellen Merkmale wird eine Qualitätsangabe bestimmt. Die bounding-Box 22', die die Objektrepräsentationen 23' umfasst, wird zusammen mit der bestimmen Qualitätsangabe in der Datenbank 6 gespeichert. Darüber hinaus werden auch die Angaben hinsichtlich der Greifstrategie 24 in der Datenbank 6 gespeichert.

Die Datenbank 6 kann in einem Rechenzentrum entfernt von dem Roboter 1 angeordnet sein.

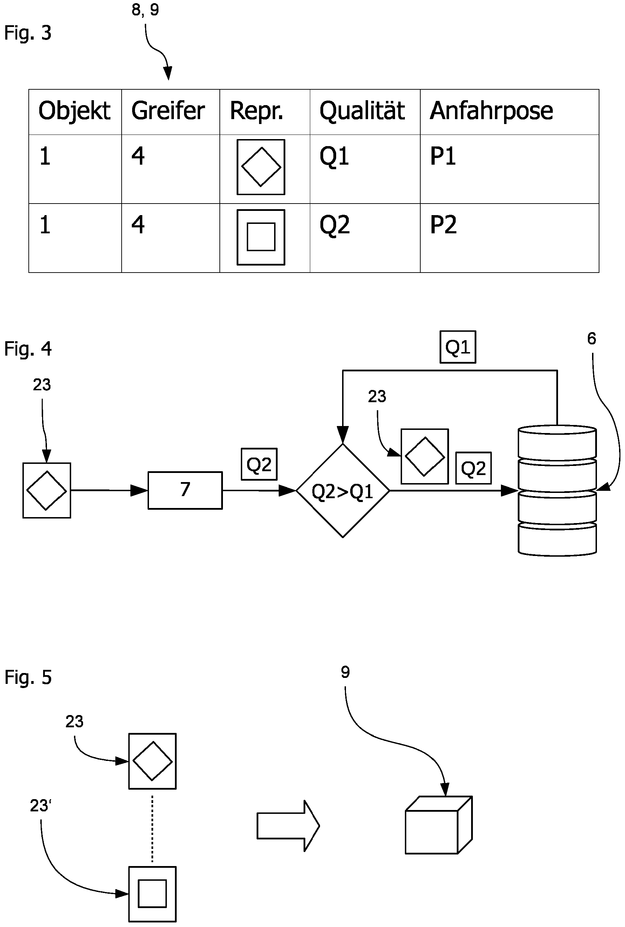

Figur 3 zeigt eine exemplarische Speicherung von Daten in der Datenbank 6. Dabei ist eine beispielhafte Tabelle 8 der Datenbank 6 dargestellt.

In der gezeigten Datenbanktabelle 8 werden zu bestimmten Objekttypen 3 die verwendeten Greifer 4, die aufgezeichnete Repräsentation 21, die Qualität der Repräsentation und die Qualität der Greifstrategie Q1, Q2 sowie eine verwendete Anfahrpose P1, P2 gespeichert. In der gezeigten Datenbanktabelle 8 sind lediglich zwei Zeilen dargestellt. Die in den zwei Zeilen der Tabelle 8 gespeicherten Informationen bilden in dem gezeigten Ausführungsbeispiel gemeinsam ein Objektmodell 9.

Die Figur 4 zeigt ein Flussdiagramm, das ein Verfahren angibt, um eine Objektrepräsentation 23 in der Datenbank 6 zu speichern.

Zunächst wird durch eine Qualitätsbestimmungseinrichtungen 7 eine Qualitätsangabe Q2 der Objektrepräsentationen 23 bestimmt. Bevor die Objektrepräsentationen 23 zusammen mit der Qualitätsangabe Q2 in der Datenbank 6 gespeichert werden kann, wird jedoch zunächst geprüft, ob bereits eine bessere Objektrepräsentation in der Datenbank 6 gespeichert ist.

Hierzu wird aus der Datenbank 6 eine Qualitätsangabe Q1 abgefragt, die einer weiteren Objektrepräsentation desselben Objekttyps zugeordnet ist. Die beiden Qualitätsangaben Q1 und Q2 werden nun verglichen. Nur wenn die Qualitätsangabe Q2 besser ist als die Qualitätsangabe Q1, wird die Objektrepräsentation 23 zusammen mit der Qualitätsangabe Q2 in der Datenbank 6 gespeichert, wobei die Qualitätsangabe Q1 und die zugeordnete Objektrepräsentation gelöscht werden. Im bevorzugten Ausführungsbeispiel geben die Qualitätsangabe Q1 und Q2 die Anzahl visueller Merkmale in den zugehörigen Objektrepräsentationen an. Es kann daher ein einfacher ">"-Vergleich ausgeführt werden, wobei eine Qualitätsangabe als besser gilt, wenn die Anzahl der visuellen Merkmale größer ist.

Figur 5 zeigt ein weiteres Beispiel, wie aus einzelnen Objektrepräsentationen 23, 23' ein Objektmodell 9 erzeugt werden kann. In dem gezeigten Ausführungsbeispiel der Figur 5 werden eine Vielzahl von Objektrepräsentationen 23, 23' mittels eines sogenannten Stitching-Verfahrens derart zusammengefügt, dass ein Programm ein CAD-Modell 9 berechnen kann.

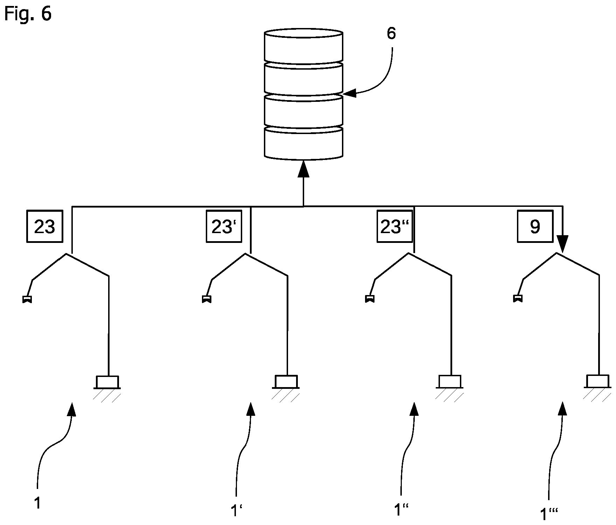

Figur 6 zeigt ein Ausführungsbeispiel, bei dem insgesamt drei Roboter 1, 1', 1", 1‴ an unterschiedlichen Standorten das vorstehend beschriebene Verfahren ausführen. Alle Roboter 1, 1', 1" senden jeweils Objektrepräsentationen 23, 23', 23" an eine einzige Datenbank 6. Alle beteiligten Roboter 1, 1', 1", 1‴ greifen Objekte 3, 3' vom selben Typ, sodass eine Zuordnung nicht möglich ist.

Mit dem beschriebenen Ausführungsbeispiel kann in sehr kurzer Zeit ein gutes Objektmodell 9 erzeugt werden, sodass nach einem kurzen Zeitraum bereits von einem modellfreien Greifen auf ein modellbasiertes Greifen umgeschaltet werden kann.

Ein vierter Roboter 1‴ kann nun das Objektmodell 9 herunterladen, und ein Greifen von Objekten 3, 3' unter Verwendung eines modellbasierten Verfahrens ausführen.

Figur 6 zeigt ein verteiltes System, bei dem Roboter 1, 1', 1" Objekte mit modellfreien Verfahren greifen. Jeder der Roboter 1, 1', 1" erstellt eine Objektrepräsentation 23, 23', 23", die jeweils in einer Datenbank 6 gespeichert werden. Unter Verwendung der gespeicherten Objektrepräsentationen 23, 23', 23" wird ein Objektmodell 9 erstellt, wie es vorstehend schon eingehend beschrieben ist.

In dem Ausführungsbeispiel der Figur 6 kann ein weiterer Roboter 1‴, der dem System neu hinzugefügt wird, das erstellte Objektmodell 9 von der Datenbank 6 herunterladen und so unmittelbar mit einem modellbasierten Greifverfahren beginnen, Objekte zu greifen.

Dabei kann der Roboter 1‴ an einem gänzlich anderen Standort vorgesehen sein, als die Roboter 1, 1', 1". Zum Beispiel kann das Erstellen des Objektmodells 9 an einem ersten Lagerstandort ausgeführt werden. Der Roboter 1‴ kann über das Internet mit der Datenbank 6 verbunden sein und somit an einem beliebigen Standort stehen.

An dieser Stelle sei darauf hingewiesen, dass alle oben beschriebenen und in den unabhängigen Ansprüchen definierten Teile als erfindungswesentlich beansprucht werden. Abänderungen hiervon sind dem Fachmann geläufig. Der eigentliche Schutzumfang der Erfindung wird aber nur die die angehängten Ansprüche bestimmt.

### Bezugszeichenliste:

- 1, 1', 1", 1‴: Roboter
- 2: Kiste
- 3, 3': Objekt
- 4: Greifer/Sauggreifer
- 5: Förderband
- 6: Datenbank
- 7: Qualitätsbestimmungseinrichtung
- 8: Datenbanktabelle
- 9: Objektmodell
- 10: 3D-Kamerasystem
- 11, 11': Kamera
- 21: 2D/3D-Repräsentation
- 22, 22': Bounding-Box
- 23, 23', 23‴: Objektrepräsentation
- 24: Greifstrategie
- 25: Greifpunkt
- Q1, Q2: Greifqualität
- P1, P2: Pose

## Patentansprüche

1. Verfahren zum Ansteuern eines ersten und zweiten Manipulators (1, 1') eines Robotersystems zum Greifen eines Objekts (3, 3'), folgende Schritte aufweisend:
- Empfangen einer ersten visuellen Objektrepräsentation (23), die mindestens ein erstes zu greifendes Objekt (3) angibt;
- Bestimmen einer Greifstrategie (24) unter Verwendung der ersten Objektrepräsentation (23) mit einem modellfreien Greifverfahren;
- Ansteuern des ersten Manipulators (1) zum Greifen des Objekts (3, 3') unter Verwendung der Greifstrategie (24);
- Erstellen eines Objektmodells (9) unter Verwendung der ersten Objektrepräsentation (23) für ein modellbasiertes Greifen des ersten Objekts (3);
- Bestimmen einer der ersten Objektrepräsentation (23) zugeordneten Qualitätsangabe (Q1), die die Qualität des Greifens unter Verwendung der Greifstrategie (24) angibt und eine Angabe über die Anzahl visueller Merkmale der ersten Objektrepräsentation (23) umfasst und eine Angabe darüber enthält, ob das Greifen des Objekts (3) erfolgreich ausgeführt worden ist;
- Speichern des Objektmodells (9), der Objektrepräsentation (23) und der Qualitätsangabe (Q1) in einer Datenbank (6);
- Vergleichen der bestimmten Qualitätsangabe (Q1) mit einer gespeicherten Qualitätsangabe (Q2), die einer zweiten gespeicherten Objektrepräsentation (23') zugeordnet ist;
in Abhängigkeit des Vergleichens:
∘ Aktualisieren des gespeicherten Objektmodells (9) unter Verwendung der ersten und zweiten Objektrepräsentation (23, 23');
∘ Ansteuern des zweiten Manipulators (1') zum Greifen mindestens eines zweiten Objekts (3') unter Verwendung eines modellbasierten Greifverfahrens und unter Verwendung des Objektmodells (9), wobei das erste Objekt (3) und das zweite Objekt (3') vom selben Typ sind und damit zumindest im Wesentlichen identische geometrische Maße und/oder gleiche visuelle Merkmale aufweisen.

2. Verfahren nach einem der vorhergehenden Ansprüche,
**gekennzeichnet durch**
Prüfen, ob ein Prüfkriterium bezüglich des Objektmodells (9) erfüllt ist, wobei das Steuern mit einem modellbasierten Verfahren ausgeführt wird, wenn das Prüfkriterium erfüllt ist.

3. Verfahren nach einem der vorhergehenden Ansprüche,
**dadurch gekennzeichnet, dass**
das Objektmodell (9) als ein CAD-Modell ausgebildet ist, als eine Menge von einzelnen Ansichten und/oder als 3D-Punktewolke.

4. Verfahren nach einem der vorhergehenden Ansprüche,
**gekennzeichnet durch**
Berechnen einer Prüfsumme für die erste Objektrepräsentation (21), wobei die Prüfsumme eine Version der Objektrepräsentation (21) angibt.

5. Verfahren nach einem der vorhergehenden Ansprüche,
**gekennzeichnet durch**
Trainieren eines Klassifikators unter Verwendung der Greifstrategie, des Objektmodells und/oder der ersten und/oder zweiten Objektrepräsentation.

6. Verfahren nach einem der vorhergehenden Ansprüche,
**gekennzeichnet durch**
Identifizieren von Objekten in einem Zielbereich unter Verwendung des Objektmodells und Vergleichen der identifizierten Objekte mit einer Datenbasis.

7. Computerlesbares Speichermedium, welches Instruktionen enthält, die mindestens einen Prozessor eines zwei Manipulatoren umfassenden Robotersystems dazu veranlassen, ein Verfahren nach einem der vorhergehenden Ansprüche zu implementieren, wenn die Instruktionen durch den mindestens einen Prozessor ausgeführt werden.

8. Robotersystem, umfassend:
- eine Perzeptionseinrichtung (10) zum Erfassen einer Objektrepräsentation (23, 23') eines Objekts (3, 3');
- zwei Manipulatoren (1, 1'), die dazu ausgebildet sind, das Objekt (3, 3') zu greifen;
- einer Steuereinrichtung mit einer Speichereinrichtung und einer Recheneinrichtung, wobei die Steuereinrichtung dazu ausgebildet ist, ein Verfahren nach einem der Ansprüche 1 - 6 auszuführen.

## Claims

1. Method for controlling first and second manipulators (1, 1') of a robot system for gripping an object (3, 3'), comprising the following steps of:
- receiving a first visual object representation (23) indicating at least a first object (3) to be gripped;
- determining a gripping strategy (24) using the first object representation (23) with a model-free gripping method;
- controlling the first manipulator (1) to grip the object (3, 3') using the gripping strategy (24);
- creating an object model (9) using the first object representation (23) for model-based gripping of the first object (3);
- determining a quality indication (Q1) associated with the first object representation (23), which indicates the quality of the gripping using the gripping strategy (24) and includes an indication of the number of visual features of the first object representation (23) and an indication of whether the gripping of the object (3) has been successfully carried out;
- storing the object model (9), the object representation (23) and the quality indication (Q1) in a database (6);
- comparing the determined quality indication (Q1) with stored quality indication (Q2) associated with a second stored object representation (23');
as a function of the comparison:
∘ updating the stored object model (9) using the first and second object representations (23, 23');
∘ controlling the second manipulator (1') to grip at least one second object (3') using a model-based gripping method and using the object model (9), wherein the first object (3) and the second object (3') are of the same type and thus have at least substantially identical geometric dimensions and/or the same visual features.

2. Method according to one of the preceding claims,
**characterized by**
checking whether a test criterion with respect to the object model (9) is fulfilled, wherein control is carried out with a model-based method if the test criterion is fulfilled.

3. Method according to one of the preceding claims,
**characterized in that**
the object model (9) is in the form of a CAD model, as a set of individual views and/or as a 3D point cloud.

4. Method according to one of the preceding claims,
**characterized by**
calculating a checksum for the first object representation (21), wherein the checksum indicates a version of the object representation (21).

5. Method according to one of the preceding claims,
**characterized by**
training a classifier using the gripping strategy, the object model and/or the first and/or second object representation.

6. Method according to one of the preceding claims,
**characterized by**
identifying objects in a target area using the object model and comparing the identified objects with a database.

7. Computer-readable storage medium containing instructions that cause at least one processor of a robot system comprising two manipulators to implement a method according to one of the preceding claims when the instructions are executed by the at least one processor.

8. Robot system, comprising:
- a perception device (10) for capturing an object representation (23, 23') of an object (3, 3');
- two manipulators (1, 1') configured to grip the object (3, 3');
- a control device having a memory device and a computing device, wherein the control device is configured to carry out a method according to one of claims 1 to 6.

## Revendications

1. Procédé de pilotage d'un premier et d'un deuxième manipulateurs (1, 1') d'un système robotisé servant à la préhension d'un objet (3, 3'), présentant les étapes suivantes :
- Réception d'une première représentation (23) visuelle d'objet qui indique au moins un premier objet (3) à saisir ;
- Détermination d'une stratégie de préhension (24) à l'aide de la première représentation (23) d'objet à l'aide d'un procédé de préhension sans modèle ;
- Pilotage du premier manipulateur (1) servant à la préhension de l'objet (3, 3') à l'aide de la stratégie de préhension (24) ;
- Création d'un modèle (9) d'objet à l'aide de la première représentation (23) d'objet pour une prise basée sur un modèle du premier objet (3) ;
- Détermination d'une indication de qualité (Q1) associée à la première représentation (23) d'objet, qui indique la qualité de la préhension à l'aide de la stratégie de préhension (24) et comprend une indication du nombre de caractéristiques visuelles de la première représentation (23) d'objet et contient une indication sur le fait que la préhension de l'objet (3) a été effectuée avec succès ;
- Enregistrement du modèle (9) d'objet, de la représentation (23) d'objet et de l'indication de qualité (Q1) dans une base de données (6) ;
- Comparaison de l'indication de qualité (Q1) déterminée avec une indication de qualité (Q2) enregistrée associée à une deuxième représentation (23') d'objet enregistrée ;
en fonction de la comparaison :
o Mise à jour du modèle (9) d'objet enregistré à l'aide des première et deuxième représentations (23, 23') d'objet ;
o Pilotage du deuxième manipulateur (1') servant à la préhension d'au moins un deuxième objet (3') à l'aide d'un procédé de préhension basé sur un modèle et à l'aide du modèle (9) d'objet, le premier objet (3) et le deuxième objet (3') étant du même type et présentant ainsi au moins des dimensions géométriques sensiblement identiques et/ou des caractéristiques visuelles identiques.

2. Procédé selon l'une des revendications précédentes,
**caractérisé par**
le fait de vérifier si un critère de vérification concernant le modèle (9) d'objet est satisfait, le pilotage étant exécuté avec un procédé basé sur un modèle si le critère de vérification est satisfait.

3. Procédé selon l'une des revendications précédentes,
**caractérisé en ce que**
le modèle (9) d'objet est conçu comme un modèle CAO, comme un ensemble de vues individuelles et/ou comme un nuage de points 3D.

4. Procédé selon l'une des revendications précédentes,
**caractérisé par**
le calcul d'une somme de vérification pour la première représentation (21) d'objet, la somme de vérification indiquant une version de la représentation (21) d'objet.

5. Procédé selon l'une des revendications précédentes,
**caractérisé par**
l'entraînement d'un classificateur à l'aide de la stratégie de préhension, du modèle d'objet et/ou de la première et/ou de la deuxième représentation d'objet.

6. Procédé selon l'une des revendications précédentes,
**caractérisé par**
l'identification d'objets dans une zone cible à l'aide du modèle d'objet et la comparaison des objets identifiés avec une base de données.

7. Support de stockage lisible par ordinateur contenant des instructions qui amènent au moins un processeur d'un système robotisé comprenant deux manipulateurs à mettre en œuvre un procédé selon l'une des revendications précédentes lorsque les instructions sont exécutées par ledit au moins un processeur.

8. Système robotisé, comprenant :
- un dispositif de perception (10) pour saisir une représentation (23, 23') d'objet d'un objet (3, 3') ;
- deux manipulateurs (1, 1') qui sont conçus pour à la préhension de l'objet (3, 3') ;
- un dispositif de pilotage comprenant un dispositif d'enregistrement et un dispositif de calcul, le dispositif de pilotage étant conçu pour exécuter un procédé selon l'une des revendications 1-6.
